**Europäisches Patentamt**

**European Patent Office**

**Office européen des brevets**

(11) Veröffentlichungsnummer: **0 007 060**
**A1**

## (12) EUROPÄISCHE PATENTANMELDUNG

(21) Anmeldenummer: **79102255.1**

(22) Anmeldetag: **04.07.79**

(51) Int. Cl.³: **C 09 D 1/02**
**C 04 B 19/04**

(30) Priorität: **15.07.78 DE 2831189**

(43) Veröffentlichungstag der Anmeldung:
**23.01.80 Patentblatt 80/2**

(84) Benannte Vertragsstaaten:
**DE FR GB NL**

(71) Anmelder: **BAYER Aktiengesellschaft**
**Zentralbereich Patente, Marken und Lizenzen Bayerwerk**
**D-5090 Leverkusen 1(DE)**

(72) Erfinder: **Krejci, Milan, Dipl.-Ing.**
**Bethelstrasse 62**
**D-4150 Krefeld(DE)**

(72) Erfinder: **Kresse, Peter, Dr.**
**Deswatinesstrasse 67**
**D-4150 Krefeld(DE)**

(54) Beschichtungspasten für anorganische Baustoffe und Verfahren zur Beschichtung sowie beschichtete Baustoffe.

(57) Die vorliegende Erfindung betrifft Beschichtungspasten für anorganische Baustoffe, die Alkalisilikat, Metalloxyde, gegebenenfalls Pigmente und/oder übliche Füllstoffe und-/oder Wasser enthalten, wobei der Gehalt des in der Paste vorliegenden Zinkoxyds zwischen 10 und 20 Mol% liegt, und die Paste ferner zwischen 6 und 13 Mol% Kaliumoxyd enthält, ein Verfahren zum Beschichten von vorgeformten Zement- und/oder kalkhaltigen Bauteilen sowie Steine bzw. Platten, die mit den erfindungsgemäßen Beschichtungspasten beschichtet sind.

EP 0 007 060 A1

EAYER AKTIENGESELLSCHAFT          5090 Leverkusen, Bayerwerk
Zentralbereich                   Gr/bc
Patente, Marken und Iizenzen

Beschichtungspasten für anorganische Baustoffe und
Verfahren zur Beschichtung sowie beschichtete Baustoffe

Es sind verschiedene Methoden bekannt, Baustoffe auf Zement- und/oder Kalkbasis mit glasurartigen Beschichtungen zu versehen. Diese Beschichtungen auf Basis Silikat haben in der Asbestzementproduktion bereits ihren festen Platz gefunden. In der Regel wird auf die bereits erhärteten Asbestzementplatten eine wäßrige Farbpaste, bestehend im wesentlichen aus Wasserglas und Zinkoxid als oxydischer Komponente in einem Mengenverhältnis, das sich glasartige Zinksilikate bilden können, aufgespritzt. Die Härtung der Beschichtung unter Bildung von Silikaten erfolgt entweder im Autoklaven unter Druck bei höheren Temperaturen oder durch rein thermische Behandlung bei Normaldruck.

Le A 18 852 -Ausland

Die deutschen Offenlegungsschriften 25 39 718 bzw. 26 02 365 betreffen Verfahren zum Beschichten von vorgeformten Bauteilen wie Betondachsteinen, Kalksandsteinen, Asbestzementplatten, Betonfertigteilen auf der Basis anorganischer, übliche Zuschlagstoffe enthaltender Bindemittel mit glasurartigen silikat- und/oder phosphathaltigen Überzügen. Es ist nach diesen bekannten Verfahren möglich, die zinkoxid- und silikathaltigen Beschichtungspasten auf die vorgeformten nicht gehärteten Bauteile aufzubringen, sie in einen gelartigen nicht fließfähigen Zustand zu überführen, worauf sowohl das vorgeformte Bauteil als auch die Beschichtung in gleicher Zeitphase gehärtet werden.

Die Zusammensetzung der Beschichtungspasten, mit denen die vorgeformten Bauteile nach den bekannten Verfahren beschichtet werden können, kann in relativ weiten Grenzen variieren. Bevorzugte Pasten für die Beschichtung enthalten Alkalisilikat, beispielsweise Natriumsilikat in wäßriger Lösung (Wasserglas) Metalloxide, (z.B. $ZnO$, $MgO$, $PbO$, $CaO$, $B_2O_3$, $Al_2O_3$) einzeln oder in beliebiger Kombination, wobei der Gehalt an $SiO_2$ zwischen etwa 42 bis 63 Mol-%, für $Na_2O$ zwischen etwa 11 bis 27 Mol-%, für Gesamtmetalloxid zwischen etwa 19 bis 42 Mol-%, liegt (bezogen auf Gesamtgewicht dieser Komponenten), wobei auch oxidhaltige Verbindungen, wie z.B. Carbonate oder Phosphate für den notwenigen Metalloxidgehalt in der Paste herangezogen werden können. Ferner kann die Paste Pigmente, beispielsweise $TiO_2$, rote, gelbe oder schwarze Eisenoxide und/oder Eisenoxidhydroxide, Chromoxidpigmente, übliche Füllstoffe, wie z.B. Kaolin,

Le A 18 852

Calciumcarbonat enthalten. Pigmente, Füllstoffe und Wasser werden in solchen Mengen zugesetzt, daß eine gut verarbeitbare, spritz- und streichfähige Paste erhalten wird. Ferner soll der Pigment- und/oder Füllstoffgehalt in der Beschichtungspaste 25 Gew.-%, vorzugsweise 10 bis 15 Gew.-%, nicht übersteigen. Die bekannten Beschichtungspasten enthalten das Zinkoxid in Form von Zinkoxid-Weißpigment, welche eine Teilchengröße von etwa 0,1 bis 1 /um und eine spezifische Oberfläche nach BET zwischen etwa 3,5 und 10 m$^2$/g bei einer kubischen Teilchenform aufweisen; der Zinkoxidgehalt derartiger Zinkweißpigmente liegt in der Regel höher als 99 %.

Mit der Anwendung derartiger Beschichtungspasten bei der Beschichtung anorganischer Bauteile ist jedoch eine relativ lange Härtungszeit im Temperaturbereich von etwa 200 bis 300°C sowie ein relativ hoher Löslichkeitsgrad (d.h. der Anteil an wasserlöslichen Bestandteilen der Beschichtung, der durch Kochtests in destilliertem Wasser ermittelt werden kann) verbunden; zudem kommt es durch das Deckvermögen von Zinkoxid-Weißpigmenten zur Aufhellung der Farbe, so daß kräftige Farbtöne nur sehr schwer zu erzielen sind.

Eine Aufgabe der vorliegenden Erfindung besteht darin, Nachteile der bekannten Beschichtungspasten zu verringern bzw. zu vermeiden.

Le A 18 852

- 4 -

Gegenstand der vorliegenden Erfindung sind Beschichtungspasten für anorganische Baustoffe, enthaltend Alkalisilikat, Metalloxide, gegebenenfalls Pigmente und/oder übliche Füllstoffe und/oder Wasser, wobei der Gehalt an $SiO_2$ zwischen etwa 55 bis 70 Mol-%, für Natriumoxid zwischen etwa 10 bis 20 Mol-%, für Gesamtmetalloxid ohne Berücksichtigung von Natrium- und Kaliumoxid zwischen etwa 10 bis 20 Mol-% liegt, dadurch gekennzeichnet, daß der Gehalt des in der Paste vorliegenden Zinkoxides zwischen 10 und 20 Mol-% liegt und aus hochdispersem Zinkoxid besteht und ferner die Paste zwischen 6 und 13 Mol-%, vorzugsweise 8 bis 10 Mol-% Kaliumoxid enthält.

Hochdisperses Zinkoxid konnte bislang in Beschichtungspasten auf Wasserglasbasis nicht eingesetzt werden, da die Reaktion mit Natriumwasserglas bereits bei Raumtemperatur in einer für die Praxis zu kurzen Zeit verläuft. So beträgt die Topfzeit(unter der man die Zeit versteht, in der keine Änderung der chemischen und physikalischen Eigenschaften, die einen direkten Einfluß auf die Verarbeitbarkeit einer Beschichtungspaste haben, erfolgt), einer Beschichtungspaste auf Basis Natriumwasserglas mit hochdispersem Zinkoxid etwa 3 Stunden. Es wurde nun gefunden, daß die Reaktionsgeschwindigkeit von hochdispersem Zinkoxid in Mischungen von Natrium-(37-40° Be') und Kaliumwasserglas (28-30° Be') mit einem Gewichtsverhältnis zwischen etwa 1:2 und 1:4, vorzugsweise 1:3 unterschiedlich verläuft, so daß eine deutliche Verlängerung der Topfzeit erreicht werden kann und eine gute spritzfähige Beschichtungspaste resultiert.

Le A 18 852

Gegenstand der vorliegenden Erfindung ist ferner ein Verfahren zum Beschichten von vorgeformten zement- und/oder kalkhaltigen Bauteilen wie Betonfertigteilen, Betondachsteinen, Kalksandsteinen, auf der Basis anorganischer übliche Zuschlagstoffe enthaltender Bindemittel, wobei man aus dem anorganischen Bindemittel und Wasser und üblichen Zuschlagstoffen eine formbare Masse herstellt, aus dieser Bauteile formt und auf die vorgeformten Bauteile eine Beschichtungspaste, die gegebenenfalls Pigmente und/oder Füllstoffe enthält, aufträgt, das dadurch gekennzeichnet ist, daß man

a) auf das nicht gehärtete Bauteil eine Kalium- und Natriumwasserglas- und hochdisperses Zinkoxid enthaltende Beschichtungspaste in dünner Schicht aufträgt, diese in einen gelartigen nicht fließfähigen Zustand überführt, worauf sowohl das vorgeformte Bauteil als auch die Beschichtung gleichzeitig gehärtet werden; bzw.

b) auf das gehärtete Bauteil eine Kalium- und Natriumwasserglas und hochdisperses Zinkoxid enthaltende Paste in dünner Schicht aufträgt und diese nach Überführung in einen gelartigen nicht fließfähigen Zustand ebenfalls härtet.

Die Zusammensetzung der erfindungsgemäßen Beschichtungspasten richtet sich im allgemeinen nach dem Charakter der zu beschichtenden Baustoffoberflächen und den Qualitativen Forderungen an die Beschichtung. Die prozentuale Menge (Gew.-%) der Komponenten liegt zwischen etwa:

Le A 18 852

- 6 -

Natriumwasserglas (ca. 37 bis 40 Bé) ca. 14 bis 20
Kaliumwasserglas (ca. 28 bis 30 Bé) ca. 55 bis 67
hochdisperses Zinkoxid ca. 5 bis 10
Füllstoff ca. 5 bis 20
Pigment ca. 3 bis 10
Wasser ca. 0 bis 16

Das Verhältnis von Natrium- zu Kaliumwasserglas in **Gewichtsprozenten** soll dabei zwischen etwa 15 : 85 bis 30 : 70,
vorzugsweise 25:75 bis 20:80 liegen.

Die erfindungsgemäßen Beschichtungspasten können die
üblichen Pigmente und Füllstoffe enthalten, wie sie
beispielsweise auch in Zusammenhang mit bekannten Beschichtungsmassen, wie sie in der deutschen Offenlegungsschrift 2 602 365 beschrieben sind, verwendet werden. Pigmente, Füllstoffe une Wasser werden in solchen
Mengen zugesetzt, daß eine gute verarbeitbare spritz-
und streichfähige Paste erhalten wird. Im Sinne der vorliegenden Erfindung werden Pigmente oder Füllstoffe,
auch wenn sie oxidischer Natur sind, nicht mit dem Begriff Metalloxid beschrieben.

Unter hochdispersem Zinkoxid im Sinne der vorliegenden Erfindung wird ein sehr feinteiliges Zinkoxid verstanden,
welches Teilchengrößen im Bereich von etwa 0,045 bis
0,055 $\mu$m, vorzugsweise 0,05 $\mu$m und spezifische Oberflächen nach BET zwischen etwa 30 bis 45 $m^2$/g vorzugsweise
40 bis 45 $m^2$/g, enthält. Derartige, hochdisperse Zinkoxide können beispielsweise erhalten werden durch Fällung aus Zinksulfatlauge und thermischer Zersetzung.

Le A 18 852

Ein solches hochdisperses Zinkoxid, welches etwa einen Zinkoxidgehalt von 93 bis 96 % aufweist und daneben etwa 3 bis 5 Gew.-% Magnesiumoxid enthalten kann, bewirkt in Gegenwart der erfindungsgemäßen Mengen von Natrium- und Kaliumwasserglas einen verlangsamten Abbindungsprozeß der Wasserglasbeschichtung, so daß sich diese Mischungen hervorragend für die Beschichtung anorganischer Baustoffe eignen; so bleibt eine Mischung aus Natrium- und Kaliumwasserglas mit hochdispersem Zinkoxid bei einem Mischungsverhältnis von Natrium- zu Kaliumwasserglas von 1:4 ca. 16 bis 24 Stunden lang gut spritzfähig.

Mit dem Einsatz von hochdispersem Zinkoxid in den erfindungsgemäßen Beschichtungspasten sind weitere Vorteile verbunden, die mit den bekannten Beschichtungspasten nicht zu erreichen sind. Es sind insbesondere das niedrige optische Streuvermögen und der rasche Verlauf der Bildung von Silikaten in der Härtungsphase. Bei Gegenwart farbgebender anorganischer Pigmente können viel kräftigere und dunkle Farbtöne erzielt werden. Dagegen verursachen die lichtstreuenden Eigenschaften von Zinkoxid-Weißpigmenten eine deutliche Aufhellung des Farbtones.

Da sich die Zusammensetzung der erfindungsgemäßen Beschichtungspasten in Abhängigkeit von den zu beschichtenden Baustoffoberflächen in den bevorzugten Ausfüh-

Le A 18 852

- 8 -

rungsformen unterscheidet, werden nachfolgend bevorzugte Beschichtungspasten in Abhängigkeit von zu beschichtenden Bauteilen beschrieben:

Für die Beschichtung poröser Betondachsteine eignen sich insbesondere Beschichtungspasten mit folgender Zusammensetzung in Gew.-Teilen:

| Natriumwasserglas 37 bis 40° Bé, | 14 bis 17 |
| Kaliumwasserglas 28 bis 30° Bé, | 60 bis 67 |
| Zinkoxid hochdispers | 6 bis 10 |
| Kaolin (Füllstoff) | 5 bis 7 |
| Pigment | 3 bis 8 |
| Wasser | O bis 5 |

Zur Beschichtung von Asbestzementplatten mit dichter Oberfläche eignen sich insbesondere folgende Beschichtungspasten (Angaben in Gew.-Teilen):

| Natriumwasserglas 37 bis 40° Bé | 14 bis 17 |
| Kaliumwasserglas 28 bis 30° Bé | 60 bis 67 |
| Zinkoxid hochdispers | 6 bis 10 |
| Kaolin (Füllstoff) | 5 bis 7 |
| Pigment | 3 bis 8 |
| Wasser | 5 bis 10 |

Bei der Durchführung des erfindungsgemäßen Beschichtungsverfahrens unter Anwendung der erfindungsgemäßen Beschichtungspasten werden die beispielsweise in einem Dissolver oder in Kugelmühlen bereiteten homogenen Beschichtungspasten in dieser Form auf die vorgeformten Bauteile direkt, wenn die Bauteile eine Vorsatzschicht entsprechend

Le A 18 852

der deutschen Offenlegungsschrift 26 02 365 enthalten, auf die Vorsatzschicht, in dünner Schicht (etwa 40 bis 80 $\mu$m) aufgesprüht, aufgespritzt oder aufgestrichen. Für 1 m$^2$ zu beschichtender Fläche des vorgeformten Bauteils werden 250 bis 500, vorzugsweise 300 bis 400 g, Beschichtungspaste aufgebracht.

Nach dem Aufbringen der Wasserglaspaste auf das vorgeformte Bauteil wird zunächst eine Verfestigung der Wasserglaspaste bis zu einem gelartigen, nicht fließfähigen Zustand bei noch nicht gehärteten Bauteilen an der Luft für ca. 0,5 bis 3 Stunden abgewartet.

Wie in den deutschen Offenlegungsschriften 25 39 718 bzw. 26 02 365 beschrieben, können dabei sowohl dem vorgeformten Bauteil wie auch der Vorsatzschicht, die auf das Bauteil aufgebracht wird, bestimmte Mengen löslicher anorganischer Salze zugesetzt werden, die die wasserhaltige Beschichtungspaste in einem gelartigen, nicht fließfähigen Zustand überführen.

Die verfestigte Beschichtungspaste kann anschließend gleichzeitig mit dem noch nicht gehärteten Bauteil gehärtet werden. Die Härtung kann in diesem Falle z.B. in einem indirekt elektrisch beheizten Autoklaven bei Temperaturen zwischen 150 bis 210$^o$C, vorzugsweise zwischen 170 und 180$^o$C und Drucken zwischen 4 und 19 bar, vorzugsweise 7 bis 10 bar, erfolgen. Die Härtungsdauer liegt bei den angegebenen Temperaturen bei etwa 4 bis 8 Stunden.

Le A 18 852

- 10 -

Nach einer anderen Ausführungsform des erfindungsgemäßen Verfahrens kann die Beschichtungspaste auf bereits gehärtete zement- und/oder kalkhaltige Bauteile aufgetragen werden; auch hier wird nach dem Aufbringen der Wasserglaspaste zunächst eine Verfestigung der Wasserglaspaste vorzugsweise im Trockenschrank bei ca. 60 bis 80°C innerhalb von etwa 5 Minuten bis zu 1 Stunde abgewartet. Unmittelbar danach erfolgt die Härtungsphase in trockener Atmosphäre bei einer Temperatur von 110-140°C, vorzugsweise bei 130°C in einer Zeit von 0,5-1,5 Stunden, vorzugsweise 1 Stunde und die anschließende Härtung der Beschichtungspaste erfolgt dann ebenso in trockener Atmosphäre bei einer Temperatur von 200 bis 300°C, vorzugsweise bei 250°C, ohne Druck in einer Zeit von ca. 12 Minuten bis 4 Stunden.

Nachfolgend wird die vorliegende Erfindung beispielhaft erläutert:

Le A 18 852

- 11 -

Beispiel 1 (Vergleichsbeispiel)

Aus 14,7 Gew.-Teilen Natriumwasserglas, 37 bis 40°Bé,
61,1 Gew.-Teilen Kaliumwasserglas 28 bis 30° Bé, 8,4
Gew.-Teilen Zinkoxid-Weißpigment, 6,3 Gew.-Teilen Kaolin, 4,2 Gew.-Teilen Pigment und 5,3 Gew.-Teilen Wasser
wurde in der Kugelmühle zu einer homogenen Paste hergestellt.

Nachfolgend wird beschrieben, wie die Paste auf die
Oberfläche des Grundkörpers aufgebracht und gehärtet
wurde.

Die Paste wurde mittels einer Spritzpistole (Düsendurchmesser 1,8 mm) auf die Oberfläche der Betondecksteine
in 3 Kreuzgängen aufgesprüht, so daß sich ein geschlossener
Film gebildet hat.

Anschließend wurden die Betondachsteine in trockener
Atmosphäre ohne Druck bei +80°C 1 Stunde lang vorgetrocknet und unmittelbar danach in 2 Härtungsabläufen
bei +130°C und +250°C jeweils 1 Stunde lang gehärtet.

Le A 18 852

- 12 -

Beispiel 2

Beispiel 1 wurde nachgearbeitet mit dem Unterschied, daß anstelle von Zinkoxid-Weißpigment die gleiche Menge Zinkoxid hochdispers eingesetzt wurde.

Als Maß für die Verfilmung, für die Festigkeit des Filmes und damit für die Wetterbeständigkeit der Beschichtung des Baustoffes dient die Bestimmung der nach der Härtung bei definierter Temperatur noch im Film vorhandenen löslichen Bestandteile. Die Wetterbeständigkeit kann man während einer kurzen Prüfzeit in der Freibewitterung nicht beurteilen. Deshalb wurde der Löslichkeitsgrad der gemäß Beispiel 1 und Beispiel 2 erhaltenen Beschichtungen durch Kochtests ermittelt. Der Kochtest wurde wie folgt durchgeführt:

Eine Hälfte des beschichteten Musters wurde in destilliertes Wasser getaucht und 8 Stunden lang gekocht. Die obere Hälfte des Musters wurde der Dampfeinwirkung ausgesetzt. Es zeigte sich, daß die nach Beispiel 2 erhaltene Beschichtung sehr stabil ist. Dagegen kam es bei der nach Beispiel 1 erhaltenen Beschichtung nach dem Kochtest zu zahlreichen Durchbrüchen und starker Aufhellung in der Beschichtung. Festzustellen ist ferner, daß die Freibewitterung eindeutig eine Korrelation mit den Kochtests gezeigt hat, da nach etwa 12-monatiger Exposition des nach Beispiel 1 erhaltenen Musters in der Beschichtung Risse, Aufhellung, Flecken und Kreidung zu beobachten ist, während man nach gleichem Zeitraum in der nach Beispiel 2 erhaltenen Beschichtung keine Anzeichen für eine Beschädigung bzw. Änderung der Beschichtung feststellen konnte.

Le A 18 852

- 13 -

Patentansprüche

1. Beschichtungspasten für anorganische Baustoffe, enthaltend Alkalisilikat, Metalloxide, gegebenenfalls Pigmente und/oder übliche Füllstoffe und/oder Wasser, wobei der Gehalt an $SiO_2$ zwischen etwa 55 bis 70 Mol-%, für Natriumoxid zwischen etwa 10 bis 20 Mol-%, für Gesamtmetalloxid ohne Berücksichtigung von Natrium- und Kaliumoxid zwischen etwa 10 bis 20 Mol-% liegt, dadurch gekennzeichnet, daß der Gehalt des in der Paste vorliegenden Zinkoxids zwischen 10 und 20 Mol-% liegt und aus hochdispersem Zinkoxid besteht und ferner die Paste zwischen 6 und 13 Mol-%, vorzugsweise 8 bis 10 Mol-% Kaliumoxid enthält.

2. Beschichtungspasten gemäß Anspruch 1, dadurch gekennzeichnet, daß die prozentuale Zusammensetzung der Komponenten zwischen etwa 14 bis 20 Gew.-% Natriumwasserglas (37 bis 40°Be´), etwa 55 bis 67 Gew.-% Kaliumwasserglas (28 bis 30°Be´), 5 bis 10 Gew.-% hochdisperses Zinkoxid, 5 - 20 Gew.-% Füllstoff, 3 - 10 Gew.-% Pigment und 0 bis 16 Gew.-% Wasser liegt.

3. Beschichtungspasten gemäß einem der Ansprüche 1 bis 2, dadurch gekennzeichnet, daß das Gewichtsverhältnis von Natrium- zu Kaliumwasserglas zwischen etwa 15:85 bis 30:70, vorzugsweise 25:75 bis 20:80 liegt.

4. Beschichtungspasten gemäß Anspruch 1, dadurch gekennzeichnet, daß die prozentuale Menge der Komponenten zwischen etwa 14 bis 17 Gew.-% Natriumwasserglas (37 bis 40° Be´), 60 bis 67 Gew.-% Kaliumwasserglas (28 bis 30° Be´), 6 bis 10 Gew.-% hochdispersen Zinkoxid, 5 bis 7 Gew.-% Füllstoff, 3 bis 8 Gew.-% Pigment und 0 bis 5 Gew.-% Wasser liegt.

Le A 18 852

- 14 -

5. Beschichtungspasten gemäß Anspruch 1, dadurch gekennzeichnet, daß die prozentuale Menge der Komponenten zwischen 14 bis 17 Gew.-% Natriumwasserglas (37 bis 40° Be´), 60 bis 67 Gew.-% Kaliumwasserglas (28 bis 30° Be´), 6 bis 10 Gew.-% hochdispersen Zinkoxid, 5 bis 7 Gew.-% Füllstoff, 3 bis 8 Gew.-% Pigment und 5 bis 10 Gew.-% Wasser liegt.

6. Verfahren zum Beschichten von vorgeformten zement- und/oder kalkhaltigen Bauteilen, Betonfertigteilen, Betondachsteinen, Kalksandsteinen, auf der Basis anorganischer, übliche Zuschlagstoffe enthaltender Bindemittel, wobei man aus dem anorganischen Bindemittel und Wasser und üblichen Zuschlagstoffen eine formbare Masse herstellt, aus dieser Bauteile formt und auf die vorgeformten Bauteile eine Beschichtungspaste, die gegebenenfalls Pigmente und/oder Füllstoff enthält, aufträgt, dadurch gekennzeichnet, daß man

a) auf das nicht gehärtete Bauteil eine Kalium- und Natriumwasserglas- und hochdisperses Zinkoxid enthaltende Beschichtungspaste in dünner Schicht aufträgt, diese in einem gelartigen, nicht fließfähigen Zustand überführt, worauf sowohl das vorgeformte Bauteil als auch die Beschichtung gleichzeitig gehärtet werden; bzw.

b) auf das gehärtete Bauteil eine Kalium- und Natriumwasserglas und hochdisperses Zinkoxid enthaltende Paste in dünner Schicht aufträgt und diese nach Überführung in einen gelartigen, nicht fließfähigen Zustand ebenfalls härtet.

Le A 18 852

0007060

7. Anorganische Baustoffe, beschichtet mit Beschichtungspasten gemäß Ansprüchen 1 bis 5.

8. Kalksandsteine, beschichtet mit Beschichtungspasten
   gemäß Ansprüchen 1 bis 5.

9. Asbestzementplatten, beschichtet mit Beschichtungspasten gemäß Ansprüchen 1 bis 5.

10. Betondachsteine, beschichtet mit Beschichtungspasten
    gemäß Ansprüchen 1 bis 5.

Le A 18 852

Europäisches
Patentamt

**EUROPÄISCHER RECHERCHENBERICHT**

Nummer der Anmeldung

**EP 79 10 2255**

| | **EINSCHLÄGIGE DOKUMENTE** | | | **KLASSIFIKATION DER ANMELDUNG (Int.Cl. 3)** |
|---|---|---|---|---|
| Kategorie | Kennzeichnung des Dokuments mit Angabe, soweit erforderlich, der maßgeblichen Teile | betrifft Anspruch | | |
| X | <u>DE - B - 1 192 091</u> (J. MANVILLE) <br> * Patentansprüche 1 bis 3; <br> Spalten 6 und 7, die Beispiele * <br><br> ---- | 1-6,9 | | C 09 D 1/02 <br> C 04 B 19/04 <br><br><br><br> **RECHERCHIERTE SACHGEBIETE (Int. Cl. 3)** <br><br> C 09 D 1/00 <br> 1/02 <br> C 04 B 19/02 <br> 19/04 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-10-1979 | DE ROECK |

EPA form 1503.1 06.78